**Europäisches Patentamt**

**European Patent Office**

**Office européen des brevets**

(19)

(11) Numéro de publication : **0 278 896 B1**

(12)

# FASCICULE DE BREVET EUROPEEN

(45) Date de publication du fascicule du brevet :
**06.03.91 Bulletin 91/10**

(51) Int. Cl.$^5$ : **B60B 39/00**

(21) Numéro de dépôt : **88810020.3**

(22) Date de dépôt : **15.01.88**

(54) **Dispositif de chaîne à neige auxiliaire pour véhicule routier.**

(30) Priorité : **21.01.87 CH 202/87**

(43) Date de publication de la demande :
**17.08.88 Bulletin 88/33**

(45) Mention de la délivrance du brevet :
**06.03.91 Bulletin 91/10**

(84) Etats contractants désignés :
**AT BE CH DE ES FR GB GR IT LI LU NL SE**

(56) Documents cités :
**EP-A- 0 209 869
FR-A- 2 317 565
US-A- 2 283 948
US-A- 3 658 158
US-A- 4 602 521**

(73) Titulaire : **Beka St-Aubin SA
Fin de Praz 5
CH-2024 St-Aubin (CH)**

(72) Inventeur : **Guyot, Claude
Rue du Senet 5
CH-2024 St-Aubin (CH)**

(74) Mandataire : **Rochat, Daniel Jean et al
Bovard SA Ingénieurs-Conseils ACP
Optingenstrasse 16
CH-3000 Bern 25 (CH)**

## Description

L'invention a pour objet un dispositif de chaîne à neige auxiliaire pour véhicule routier, notamment de poids lourd, comprenant une cage, dans laquelle peut se déplacer axialement une crémaillère actionnée par un moyen pouvant être commandé à partir de la cabine du véhicule, et un pignon en prise avec la crémaillère et supporté dans la cage de part et d'autre de celle-ci, un bras de pivotement fixé sur l'arbre du pignon et muni à son extrémité d'une roulette portant plusieurs brins de chaîne, le bras pouvant occuper deux positions, l'une libre, l'autre en prise lorsque la roulette est appuyée sous l'effet dudit moyen dans une position déterminée contre le flanc intérieur de la roue du véhicule, les brins de chaîne étant alors successivement lancés entre le sol et la roue du fait de la rotation de la roulette, et un moyen de liaison rigide de la cage à un élément fixe sous le véhicule, tel que élément de suspension ou bride de lame de suspension.

Grâce à ce dispositif, le conducteur d'un véhicule qui en est pourvu dispose d'un moyen anti-patinage des roues motrices qu'il peut enclencher rapidement et automatiquement, particulièrement lorsque les voies de circulation sont enneigées ou verglacées.

Parmi les difficultés majeures rencontrées dans ce type de dispositif, figure le problème de l'encombrement, d'une part, et celui du positionnement de la roulette, d'autre part. Le problème de l'encombrement qui se présente de manière différente pour chaque type de véhicule est double : Il s'agit de déterminer une mise en place de la cage du dispositif sous le véhicule aussi judicieuse que possible et de prévoir le dégagement nécessaire pour le bras de pivotement, lorsqu'il est amené de la position libre à la position de prise ou inversement. Le problème de positionnement de la roulette résulte du fait que le plan de ladite roulette, lorsqu'elle est en prise, doit accuser un certain angle avec le plan du flanc de la roue ou, corrélativement, avec le plan horizontal.

Dans les dispositifs connus, le bras de pivotement, muni de la roulette, est articulé autour d'un axe fixé au véhicule au moyen d'un agencement de bielle/manivelle actionné par un piston pneumatique à simple effet. D'autres exécutions comprennent un ensemble piston/crémaillère/pignon, l'axe de rotation du bras de pivotement étant identique à celui du pignon, mais toutefois orthogonal à celui de la crémaillère.

Dans le brevet US-2, 283, 948, l'axe de crémaillère et l'axe du pignon forment un angle de 90°. Aussi le dispositif comprend-il l'adjonction de mécanismes complexes de guidage et d'articulation du bras de pivotement.

Ces dispositifs connus sont difficiles à mettre en place et ne résolvent pas de manière satisfaisante les problèmes évoqués plus haut. De plus, ils nécessitent des artifices de montage complexes et délicats, ce qui augmente leur prix de revient final.

Le but de l'invention consiste à proposer un dispositif répondant au concept général décrit dans le préambule de la revendication 1, caractérisé en ce que le bras de pivotement 2 est commandé uniquement par le pignon 17, respectivement par son arbre 22 prolongeant ce dernier, lequel pignon est en prise avec la crémaillère 1 et en ce que l'axe longitudinal 16 de ladite crémaillère et l'axe 18 du pignon 17 et de son arbre 22 forment entre eux un angle prédéterminé différent de 90°, le pignon ayant une denture droite ou hélicoïdale et la crémaillère une denture correspondante, la cage 1 pouvant, en fonction de l'emplacement disponible, être agencée de telle sorte que son axe correspondant à l'axe 16 de la crémaillère soit orienté indifféremment soit horizontalement soit obliquement.

Le dispositif selon l'invention, ainsi qu'on le constatera au vu de la description détaillée qui va suivre, permet, tout en facilitant sensiblement le positionnement de la roulette qui doit satisfaire certaines conditions, de multiplier les possibilités d'emplacement de la cage du dispositif, quel que soit le type de véhicule. En particulier, la cage peut être agencée horizontalement. Grâce à cette dernière caractéristique, le montage du dispositif selon l'invention n'est plus réduit aux seuls véhicules poids lourds, comme c'est le cas dans les dispositifs connus, mais peut être prévu sur des types de véhicule dont la garde au sol est inférieure, notamment sur les véhicules de tourisme.

L'invention est décrite en détail, à titre d'exemple, à l'aide de dessins, dans lesquels :

la fig. 1 est une vue schématique d'ensemble d'une variante de montage du dispositif,

la fig. 2 est une coupe longitudinale de la cage abritant les moyens d'actionnement et d'entraînement du bras de pivotement,

la fig. 3 représente, en coupe longitudinale, une variante d'exécution de l'agencement des moyens d'actionnement et d'entraînement du bras de pivotement,

la fig. 4 représente, vue de profil, la roulette en position de prise,

la fig. 5 représente une vue de face schématique de la roulette en position de prise.

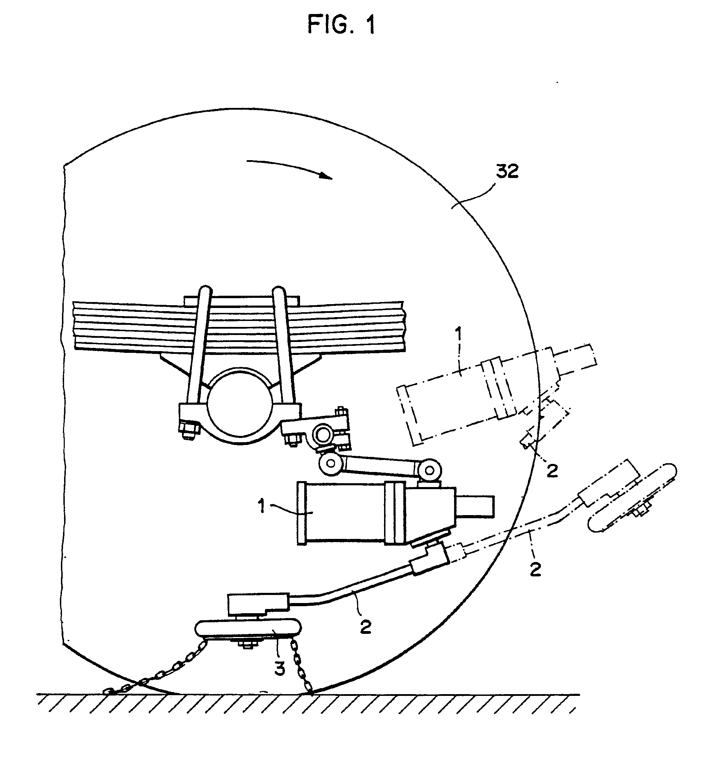

Dans la figure 1, on a représenté schématiquement le dispositif selon une variante de montage. On aperçoit que la cage 1 est placée sous le véhicule, de préférence horizontalement, dans la zone choisie à proximité de la roue motrice 32 dont on veut éviter le patinage et qu'elle est liée audit véhicule de façon rigide a l'aide de moyens non décrits. La cage abrite les moyens d'actionnement et d'entraînement, de manière à ce qu'un bras de pivotement 2, muni d'une roulette 3, puisse être amené de sa position libre (bras dirigé vers le haut) vers sa position en prise (bras dirigé vers le bas) et inversement. De manière analogue, le dispositif sera monté dans la zone, chaque fois adéquate, à proximité de la ou des autres roues motrices.

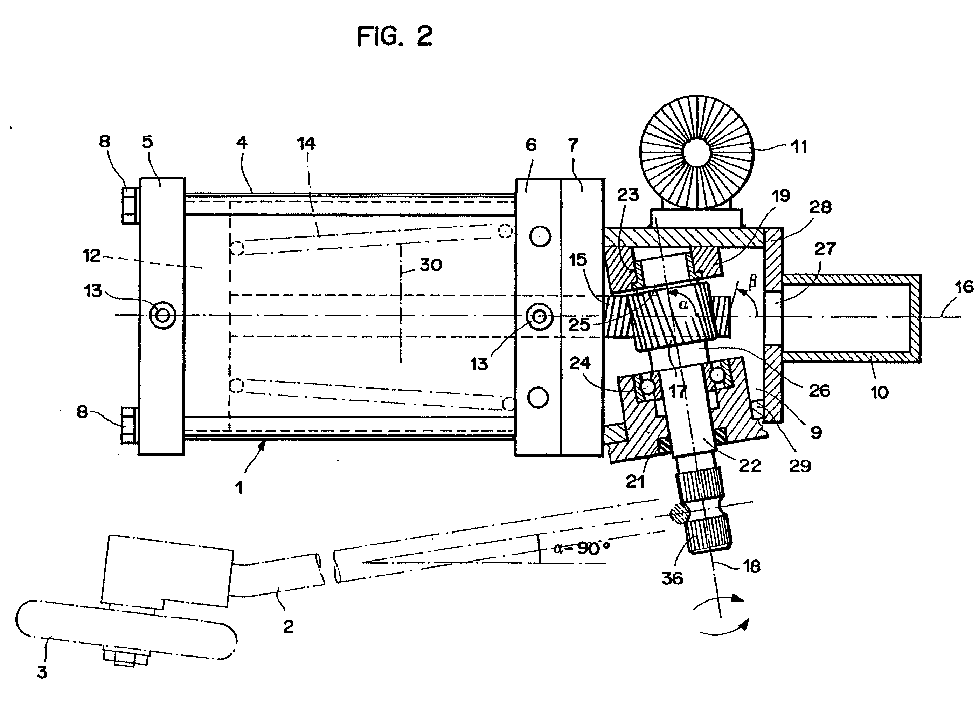

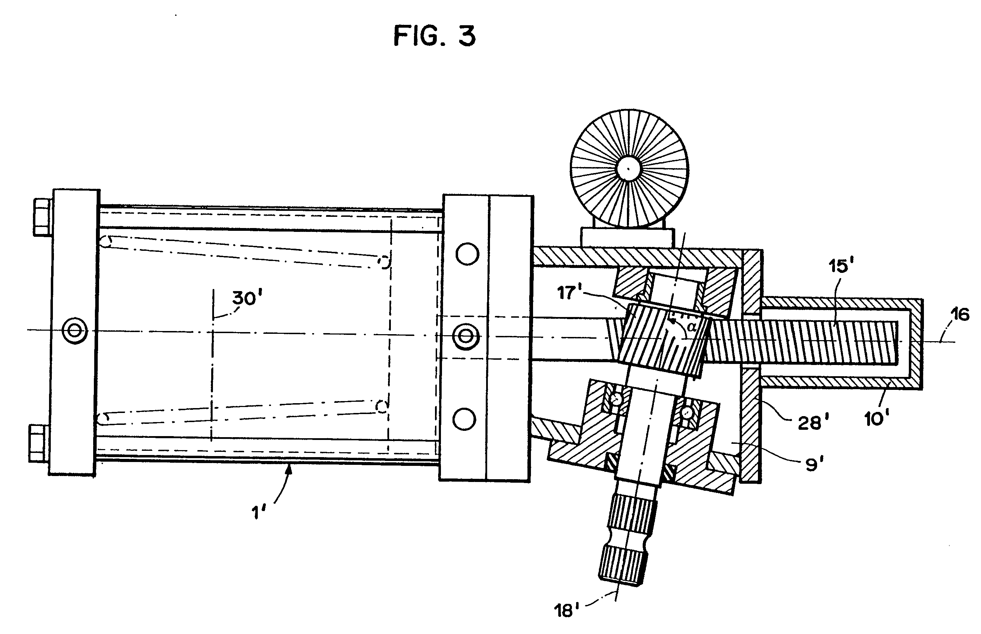

Les fig. 2 et 3 sont des coupes longitudinales de deux types d'exécution de la cage du dispositif, obéissant au même principe de fonctionnement, seul l'agencement des moyens d'actionnement étant différent. Dans la fig. 3, les éléments identiques à ceux de la fig. 2 sont désignés dans la description par les mêmes repères ; ces derniers n'ont toutefois pas été reportés à nouveau dans la fig. 3. Les éléments analogues portent également le même numéro de base mais se distinguent de la première variante par l'adjonction du signe (').

La cage 1 ou 1' est constituée d'un vérin comprenant un cylindre 4, des flasques 5, 6, 7, et des moyens d'assemblage 8 et les orifices de raccord 13 à la pression. Dans son prolongement, est montée sur le flasque 7 une boîte 9 ou 9', elle-même prolongée d'un embout 10 ou 10'. Cet embout est fixé, par soudure par exemple, sur la plaque frontale 28 (ou 28') de la boîte 9 (ou 9'). Un moyen 11 pour la fixation de la cage au véhicule est prévu sur la plaque supérieure de la boîte 9, 9'. La section de cette dernière est avantageusement carrée ou rectangulaire (fig. 2 et 3).

La boîte 9 comporte deux supports de palier 19 et 20 ayant le même axe 18 et recevant des paliers 23 et 24, respectivement. Dans l'exemple d'exécution décrit, le palier 23 est un coussinet de bronze tandis que le palier 24 est un roulement à billes. Ces paliers servent de guidage en rotation à un arbre 22 d'un pignon 17, la liaison en translation étant assurée par les épaulements 25 et 26. L'arbre 22 et le pignon 17 seront de préférence d'une seule pièce. Le pignon 17 est en prise avec la crémaillère 15, solidaire du piston 12. Une ouverture 27, pratiquée dans la plaque frontale 28 de la boîte 9, permet le passage de la crémaillère 15 dans l'embout 10. Un joint 21 assure l'étanchéité de la boîte 9. On observe que l'axe 18 commun du pignon 17 et de l'arbre 22 forme avec l'axe longitudinal 16 de la crémaillère 15 un angle α. La valeur de cet angle sera prise de préférence dans un intervalle de 100 à 140 degrés. Dans une exécution préférée, la valeur choisie est de 125 degrés. Ainsi, l'angle que formera l'axe du bras 2 perpendiculaire à l'axe 18 avec l'horizontale sera de (α - 90°) soit (125° - 90°) = 35 degrés (Fig. 2). Du fait de cette inclinaison, la denture du pignon est soit droite, soit hélicoïdale, celle de la crémaillère est oblique, l'inclinaison β, par rapport à l'axe 16, se situant dans un intervalle correspondant de 80 à 40 degrés. La plaque inférieure 29, sur laquelle est monté le support de palier 20, perpendiculaire à l'axe 18, est inclinée vers l'avant et forme avec l'axe 16 un angle égal à (α - 90) degrés. De manière analogue, la construction du support du palier 19 tient compte de cette particularité (fig. 2). Dans la variante représentée en fig. 3, les axes 16 et 18' forment un angle α' dont la valeur se situe avantageusement dans un intervalle de 40 à 80 degrés. Les particularités constructives de la boîte 9', celles de la taille du pignon 17' et de la crémaillère 15', sont symétriques (symétrie invertie) a celles qui viennent d'être exposées sur la base de la fig. 2.

Dans une forme d'exécution préférée, pour un véhicule poids lourd par exemple, les dimensions hors-tout de la cage (sans le moyen de fixation 11) sont de 350 × 120 × 120 mm environ. Le cylindre 4, d'un diamètre de 100 mm, est actionné par une pression P de 6 bars, la force d'appui de la roulette, d'un diamètre de 200 mm, étant alors de 30 kg approximativement. Le module du pignon 17, de diamètre 35 mm, est choisi de manière à obtenir l'arc voulu de déploiement du bras du pivotement allant de la position libre à la position engagée ou inversement.

Ces valeurs seront bien entendu sensiblement réduites, d'un tiers au moins, pour les dispositifs destinés à être montés sur un véhicule de tourisme.

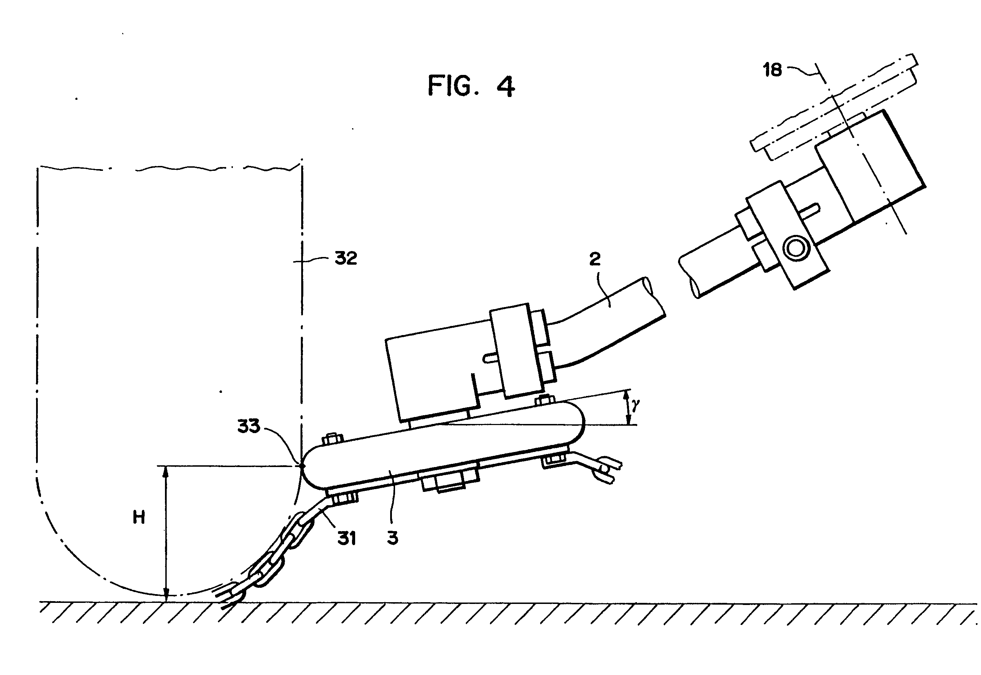

La fig. 4 est une vue de profil du bras de pivotement dont la rotation se fait autour de l'axe 18 et au bout duquel est fixée la roulette 3, pourvue de brins de chaîne 31. On voit que la roulette est légèrement inclinée par rapport au flanc de la roue 32 ou, corrélativement, par rapport au plan horizontal. L'angle γ, formé entre ce plan horizontal et celui de la roulette, est situé dans un intervalle de 0 à 10 degrés, l'entrée de la chaîne 31 contre le pneu de la roue 32 et le sol étant ainsi facilitée. Le point d'appui 33 de la roulette contre la bande de roulement de la roue du véhicule est situé a une hauteur H du sol qui est fonction du type de roue, le point 33 étant situé dans la zone de renfort du pneu.

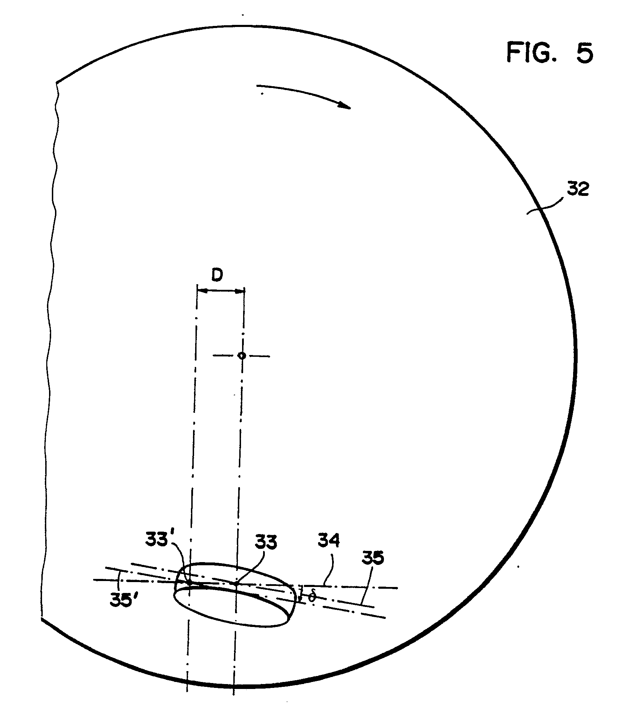

La fig. 5 est une vue de face schématique de la roulette 3 s'appuyant contre la roue 32. On aperçoit que le point 33 peut être situé sur l'axe de la roue ou légèrement décalé à une distance D en arrière du sens de roulement en un point 33'. Cette distance D est avantageusement choisie dans un intervalle de 0 à 15 mm. Le plan radial de la roulette ainsi vu de face coupe le plan du flanc de la roue selon une trace 34 horizontale ou une trace 35 (ou 35'), légèrement incliné vers l'avant, dans le sens de roulement, les traces 34 et 35 (ou 35') formant entre elles un angle δ se situant entre 0 et 3 degrés.

Le fonctionnement du dispositif est le suivant : Le vérin 4, 5, 6, 12, 13 est à double effet et est raccordé en 13 au circuit pneumatique du véhicule ainsi qu'à une commande pouvant être située dans la cabine du véhicule. Un réducteur de pression devra, le cas échéant, être prévu afin que le piston 12 soit soumis à la pression P voulue. La fig. 2 représente la cage du dispositif lorsque le bras de pivotement est en position libre. Sous l'action de la pression P, le piston 12 sera déplacé dans le cylindre 4 axialement vers la droite jusqu'au repère 30, entraînant la crémaillère 15, guidée par un support non représenté, situé sous la crémaillère et permettant en même temps de rattraper le jeu pignon/crémaillère et d'absorber les vibrations résiduelles. Lors des déplacements de la crémaillère 15 vers l'embout 10, le pignon 17 est entraîné lui-même en rotation, imprimant ainsi au bras de pivotement 2, fixé sur l'extrémité cannelée 36 de l'arbre 22 (fig. 2), un mouvement de rotation autour de l'axe 18, de manière à décrire un arc de cercle allant jusqu'à 220 degrés environ. Selon l'emplacement de la cage 1 et de la variante choisie, le bras se déploiera sous ou vers l'avant de celle-ci. La roulette 3 est ainsi amenée au point de contact 33 (ou 33') voulu avec la roue du véhicule 32. La pression P est maintenue sur le piston 12 ; la roulette 3 est entraînée en rotation lors du déplacement du véhicule et les brins 31 sont successivement lancés entre le pneu du véhicule et le sol, ce qui a pour effet d'écarter ainsi tout risque de patinage. Inversement, lorsque la face opposée du piston 12 est soumise à la pression P, la crémaillère 15 se déplacera vers la gauche (fig. 2), la roulette s'écartera de la roue du véhicule 32 et les brins de chaîne 31 cesseront d'être soumis à la force centrifuge. Le bras de pivotement 2 prendra ainsi sa position libre vers le haut (fig. 1). Pour des raisons de sécurité, il est avantageux de prévoir un organe de rappel 14 qui assurera la renvoi du bras de pivotement en position dégagée, en cas de rupture de pression dans le circuit pneumatique. Le dispositif monté à proximité de la roue motrice correspondante fonctionnera de façon analogue. Les deux dispositifs seront reliés à un moyen de distribution de manière à ce que les mouvements du bras de pivotement, de la position libre à la position en prise et inversement, se fassent soit de façon synchronisée, soit de façon alternée.

Du fait de l'angle différent de 90 degrés, le bras 2 et la roulette 3, en pivotant de la position libre à la position en prise, se déplacent dans un plan qui est oblique par rapport à l'horizontale, alors même que la cage 1 a été placée de façon optimale, son axe étant orienté horizontalement (ou obliquement), compte tenu de la place disponible.

## Revendications

1. Dispositif de chaîne à neige auxiliaire pour véhicule routier, notamment de poids lourd, comprenant une cage (1) dans laquelle peut se déplacer axialement une crémaillère (15), actionnée par un moyen pouvant être commandé à partir de la cabine du véhicule, et un pignon (17) en prise avec la crémaillère et supporté dans la cage de part et d'autre de celle-ci, un bras de pivotement (2) fixé sur l'arbre de pignon et muni à son extrémité d'une roulette (3) portant plusieurs brins de chaîne, le bras pouvant occuper deux positions, l'une libre, l'autre en prise lorsque la roulette est appuyée sous l'effet dudit moyen dans une position déterminée contre le flanc intérieur de la roue (32) du véhicule, les brins de chaîne étant alors successivement lancés entre le sol et la roue du fait de la rotation de la roulette, et un moyen (11) de liaison rigide de la cage a un élément fixe sous le véhicule, tel que élément de suspension ou bride de lame de suspension, caractérisé en ce que le bras de pivotement (2) est commandé uniquement par le pignon (17), respectivement par son arbre (22) prolongeant ce dernier, lequel pignon est en prise avec la crémaillère (1) et en ce que l'axe longitudinal (16) de ladite crémaillère et l'axe (18) du pignon (17) et de son arbre (22) forment entre eux un angle prédéterminé différent de 90°, le pignon ayant une denture droite ou hélicoïdale et la crémaillère une denture correspondante, la cage (1) pouvant, en fonction de l'emplacement disponible, être agencée de telle sorte que son axe correspondant à l'axe (16) de la crémaillère soit orienté indifféremment soit horizontalement soit obliquement.

2. Dispositif de chaîne à neige auxiliaire selon la revendication 1, caractérisé en ce que l'angle α est compris entre 100 et 140°.

3. Dispositif de chaîne à neige auxiliaire selon la revendication 1, caractérisé en ce que l'angle α est compris entre 40 et 80°.

4. Dispositif de chaîne à neige auxiliaire selon l'une des revendications 1 à 3, caractérisé en ce que le moyen d'actionnement de la crémaillère (15) est un vérin (4, 5, 6, 12, 13) à double effet.

5. Dispositif de chaîne a neige auxiliaire selon la revendication 4, caractérisé en ce que le vérin à double effet est actionné par une pression pneumatique.

6. Dispositif de chaîne à neige auxiliaire selon la revendication 4, caractérisé en ce que le vérin à double effet est actionné par une pression hydraulique.

7. Dispositif de chaîne à neige auxiliaire selon la revendication 4, caractérisé en ce que le vérin à double effet est actionné par dépression.

8. Dispositif de chaîne à neige auxiliaire selon l'une des revendications 1 à 7, caractérisé en ce qu'un organe de rappel (14) est disposé dans la cage, agissant à l'encontre de la pression du piston (12) appuyant la roulette (3) contre le flanc intérieur de la roue du véhicule.

## Claims

1. An auxiliary snow-chain device for a motor vehicle, particularly a truck, comprising a cage (1) in which a rack (15) may move axially, actuated by a means which can be controlled from the cabin of the vehicle, and a pinion (17) meshing with the rack and supported in the cage on both sides thereof, a swivel arm (2) fixed to the pinion shaft and provided at its end with a small wheel (3) bearing several lengths of chain, the arm being able to occupy two positions, one free, the other engaged when the small wheel is pressed under the influence of said means into a predetermined position against the inner sidewall of the vehicle wheel (32), the lengths of chain then being successively thrown between the ground and the wheel owing to the rotation of the small wheel, and a means (11) for joining the cage rigidly to a fixed element under the vehicle, such as a suspension element or a leaf-spring suspension, characterized in that the swivel arm (2) is controlled solely by the pinion (17), respectively by its shaft (22) extending this latter, which pinion meshes with the rack (1) and in that the longitudinal axis (16) of the said rack and the axis (18) of the pinion (17) and its shaft (22) form between them a predetermined angle other than 90°, the pinion having a spur or helical toothing and the rack a corresponding toothing, the cage (1) being arrangeable, as a function of the available location, in such a way that its axis corresponding to the axis (16) of the rack is oriented equally well either horizontally or obliquely.

2. An auxiliary snow-chain device according to claim 1, characterized in that the angle α is between 100 and 140°.

3. An auxiliary snow-chain device according to claim 1, characterized in that the angle α is between 40 and 80°.

4. An auxiliary snow-chain device according to one of claims 1 to 3, characterized in that the means for actuating the rack (15) is a double-action jack (4, 5, 6, 12, 13).

5. An auxiliary snow-chain device according to claim 4, characterized in that the double-action jack is actuated by pneumatic pressure.

6. An auxiliary snow-chain device according to claim 4, characterized in that the double-action jack is actuated by hydraulic pressure.

7. An auxiliary snow-chain device according to claim 4, characterized in that the double-action jack is actuated by a vacuum.

8. An auxiliary snow-chain device according to one of claims 1 to 7, characterized in that a return part (14) is disposed in the cage, acting contrary to the pressure of the piston (12) pressing the small wheel (3) against the inner sidewall of the vehicle wheel.

**Ansprüche**

1. Schneekettenvorrichtung für Lastkraftfahrzeuge, insbesondere für schwergewichtige Lastkraftfahrzeuge, wobei ein Gehäuse 1 vorhanden ist, in welchem sich eine Zahnstange 15 axial verschieben kann, welche von einem Mittel betätigt wird, welches von der Kabine des Fahrzeuges aus bedient werden kann, wobei ausserdem ein Ritzel 17 vorhanden ist, welches im Eingriff steht mit der Zahnstange und in dem Gehäuse auf beiden Seiten gelagert ist, und wobei ausserdem ein Schwenkarm 2 vorhanden ist, welcher auf der Welle des Ritzels befestigt ist und an seinem Ende eine Rolle 3 trägt, die mehrere Kettenglieder trägt, wobei der Arm zwei Positionen einnehmen kann, eine freie und eine Eingriffsposition, die dadurch bestimmt ist, dass die Rolle unter dem Einfluss des besagten Mittels gedrückt wird, gegen die Innenseite des Rades 32 des Fahrzeuges, wobei die Kettenglieder aufgrund der Rotation der Rolle aufeinanderfolgend zwischen dem Boden und dem Rad hindurchgeleitet werden, und wobei ausserdem ein Mittel 11 zur festen Verbindung des Gehäuses gegenüber einem festem Element unter dem Fahrzeug vorhanden ist, wie einem Dämpfungselement oder einer Blattfeder, dadurch gekennzeichnet, dass der Schwenkarm 2 einzig durch das Ritzel 17, über die sich in Verlängerung des letzteren befindende Welle 22 betätigt wird, wobei das Ritzel sich im Eingriff befindet mit der Zahnstange 1 und dass die Längsachse 16 der besagten Zahnstange und die Achse 18 des Ritzels 17 und seiner Welle 22 untereinander einen vorbestimmten Winkel bilden, welcher von 90° verschieden ist, wobei das Ritzel eine Gerad- oder eine Schrägverzahnung, und die Zahnstange eine entsprechende Verzahnung aufweist, dass das Gehäuse in Abhängigkeit des verfügbaren Raumes derart angebracht werden kann, dass seine durch die Achse 16 der Zahnstange definierte Achse nach Belieben horizontal oder schräg orientiert sein kann.

2. Schneekettenvorrichtung nach Anspruch 1, dadurch gekennzeichnet, dass der Winkel α zwischen 100° und 140° beträgt.

3. Schneekettenvorrichtung nach Anspruch 1, dadurch gekennzeichnet, dass der Winkel α zwischen 40° und 80° beträgt.

4. Schneekettenvorrichtung nach einem der Ansprüche 1 bis 3, dadurch gekennzeichnet, dass das Mittel zum Betätigen der Zahnstange 15 ein doppeltwirkender Zylinder (4, 5, 6, 12, 13) ist.

5. Schneekettenvorrichtung nach Anspruch 4, dadurch gekennzeichnet, dass der doppeltwirkende Zylinder mittels pneumatischem Druck betätigt wird.

6. Schneekettenvorrichtung nach Anspruch 4, dadurch gekennzeichnet, dass der doppeltwirkende Zylinder mittels hydraulischem Druck betätigt wird.

7. Schneekettenvorrichtung nach Anspruch 4, dadurch gekennzeichnet, dass der doppeltwirkende Zylinder mittels Unterdruck betätigt wird.

8. Schneekettenvorrichtung nach einem der Ansprüche 1 bis 7, dadurch gekennzeichnet, dass in dem Gehäuse ein Rückstellorgan 14 vorhanden ist, welches gegen den Druck des Kolbens 12 wirkt und die Rolle 3 gegen die Innenseite des Fahrzeugrades drückt.

# FIG. 1

FIG. 2

EP 0 278 896 B1

FIG. 3

FIG. 4

EP 0 278 896 B1

FIG. 5